# EUROPEAN PATENT APPLICATION

(11) **EP 0 951 130 A2**
(43) Date of publication of application: **20.10.1999**
(21) Application number: 99302966.9
(22) Date of filing: 16.04.1999
(51) Int. Cl.: H02K 1/20, H02K 1/32

(54) **Improvements in or relating to electrical rotating machines**

(30) Priority: 16.04.1998 GB 9807978
(71) Applicant: Alstom UK Limited, Rugby, Warwickshire CV21 1TB (GB)
(72) Inventor: Regan, Roger H., West Haddon, Northamptonshire NN6 7PD (GB)
(74) Representative: Dargavel, Laurence Peter

(57) **Abstract**

A component for an electrical rotating machine comprises a plurality of laminations wherein a passageway for cooling fluid is formed between at least one pair of adjacent confronting laminations by means of a pattern of cylindrical stud members (24) which extend across the passageway. The studs are attached to the face (20a) of at least one lamination (20) of the pair of laminations and function to give enhanced cooling of the laminations.

## Description

The present invention concerns improvements in or relating to rotating electrical machines.

The term 'electrical rotating machine' is intended to cover any form of apparatus having a rotating member which generates, converts, transforms or modifies electric power; *inter ailia* such machines will comprise motors, generators, synchronous condensers, synchronous converters, rotating amplifiers, phase modifiers and combinations of these in any one machine.

More specifically, the invention is concerned with a laminated component for such a machine, and it is particularly envisaged that the component will constitute a rotor or a stator of such machine.

It is known to produce such laminated components by pressing stacks of laminations together. The laminations are typically formed from sheets of electrical grade steel which are usually provided with insulating coatings. Each lamination may, for example, be of generally disc or annular form or of a form having arms extending generally radially; each lamination may be formed of a single member or may itself be of segmental construction with the segments abutted against each other e.g. at generally radially extending edges.

In a normal arrangement the laminations are provided in axial sections with a plurality of laminations, say up to 200, in each section and between each section are provided ducts for cooling fluid e.g. air, which extend generally radially. More particularly, in an electrical machine having a rotor and a stator the radial inner or outer ends of the ducts will adjoin with the air gap between the rotor and stator.

It is known to form these ducts for cooling fluid by utilising spacers in the form of I-beams, T-sections or rectangular strips. Such spacers are affixed mechanically or by welding, e.g. spot welding, to the face of an end lamination of one section and abut against the face of the adjacent end lamination of the next closest section. The spacers extend generally radially and thereby define therebetween generally radially extending passages for the passage of cooling fluid. In reality, the production and attachment of such spacers is a complex and expensive undertaking, *inter ailia* because of the need to provide spacers of appropriate size for different components; also for laminations with other than regular circumferences a number of specifically produced such spacers has to be provided which are the correct fit for the region of lamination to which they are to be affixed.

It is an object of the invention to provide an arrangement whereby a single common mass produced part may be used to define a passageway between adjacent laminations.

According to a first aspect of the invention there is provided a stator or rotor component for an electrical rotating machine, said component comprising a plurality of axially adjacent stacks of generally annular laminations, the stacks having axially extending slots therein for the reception of conductors, each lamination having apertures therein defining said slots, characterised in that the stacks are spaced apart by spacer means arranged between confronting laminations of adjacent stacks, whereby a passageway for cooling fluid is formed between each pair of adjacent stacks, the spacer means comprising a pattern of mutually spaced apart axially projecting generally cylindrical members attached to at least one of the confronting laminations, said pattern extending between radially inner and outer peripheries of the confronting laminations. The component may be a rotor or a stator.

It is preferred that the pattern of generally cylindrical members extends throughout the total radial extent of the passageway, though some departure from such total coverage of the lamination by the pattern may be tolerated, provided the cooling effect obtained in the passageway is sufficient for the duty to be obtained from the machine.

The generally cylindrical members are preferably attached to said at least one face by welding, e.g. by capacitor discharge welding.

The generally cylindrical members may be in the form of studs.

Further the generally cylindrical members are preferably arranged in a predetermined pattern to achieve a predetermined cooling effect.

Each said lamination may be of generally annular form or have the form of a segment of an annulus.

Each lamination may itself be formed from a plurality of segmental members abutting one another along generally radially extending edges.

According to a second aspect of the invention there is provided a lamination for use in a component of an electrical machine, said lamination having affixed to at least one face thereof a plurality of generally cylindrical members, the longitudinal axes of the generally cylindrical members extending transversely to said face.

The lamination may be annular in shape or have the form of a segment of an annulus.

According to a third aspect of the invention there is provided a method of forming a laminated component of an electrical rotating machine, said method comprising the steps of (i) affixing of a plurality of generally cylindrical members to a face of a lamination to extend transversely to said face, and (ii) bringing the free ends of said generally cylindrical members into juxtaposition with a face of another lamination such that a passageway for cooling fluid is formed between the faces with said generally cylindrical members extending generally across said passageway.

The invention will be described by way of example with reference to the accompanying drawings, wherein:
Figure 1 is a view of a lamination of a rotor with cylindrical members affixed thereto;
Figure 2 is a view of a lamination of a stator with cylindrical members affixed thereto;
Figure 3 is a fragmentary view of part of the stator of Figure 2 showing two teeth and a slot defined therebetween;
Figure 4 shows the view of Figure 3 with an axially extending wedge affixed in the slot;
Figure 5 shows the view of Figure 3 with a pair of coils and a wedge affixed in the slot;
Figure 6 shows a fragmentary view of part of a circumference of a stator showing a tooth which is formed with axially extending cooling ducts;
Figure 7 is a view of a segment of a lamination of a laminated stator, the lamination being formed from a plurality of such segments abutted against each other at substantially radially extending edges.

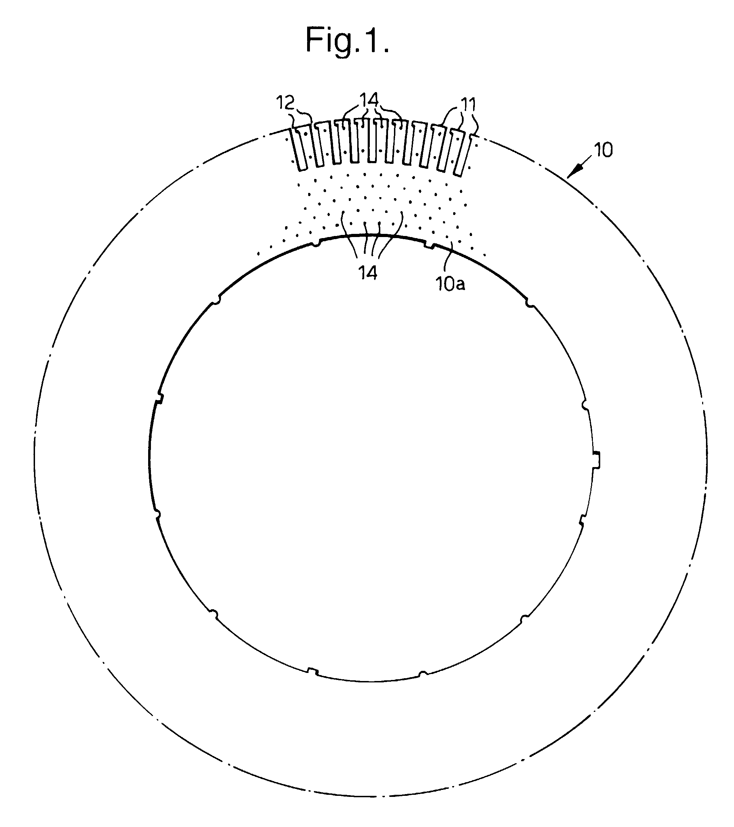

The lamination as seen in Figure 1 is a lamination 10 of a rotor of an electrical rotating machine. Such lamination comprises a generally annular member which in use is to be attached directly or indirectly to a shaft to rotate therewith. The outer circumference of the rotor lamination is formed with teeth 11 between adjacent pairs of which are formed slots 12 for receiving conductive components e.g. bars. The lamination, as shown in Figure 1, has a plurality of generally cylindrical members 14 affixed to one face 10a thereof with the axes of the members 14 extending transversely e.g. substantially perpendicular to said face 10a.

It is to be understood that a laminated rotor is built up from a plurality of laminations having the overall shape of the laminations shown in Figure 1 but only a small proportion of such laminations will be provided with the members 14. In other words in such a rotor the majority of the laminations are not provided with the cylindrical members but have simple planar faces. Thus the laminations are built up in sections each section comprising a plurality of such simple laminations plus a lamination at one end or each end of the section which end lamination or laminations is provided with the cylindrical members and each section of the laminated stator is separated from the adjacent section or sections by a plurality of generally cylindrical members affixed to the face of an end lamination.

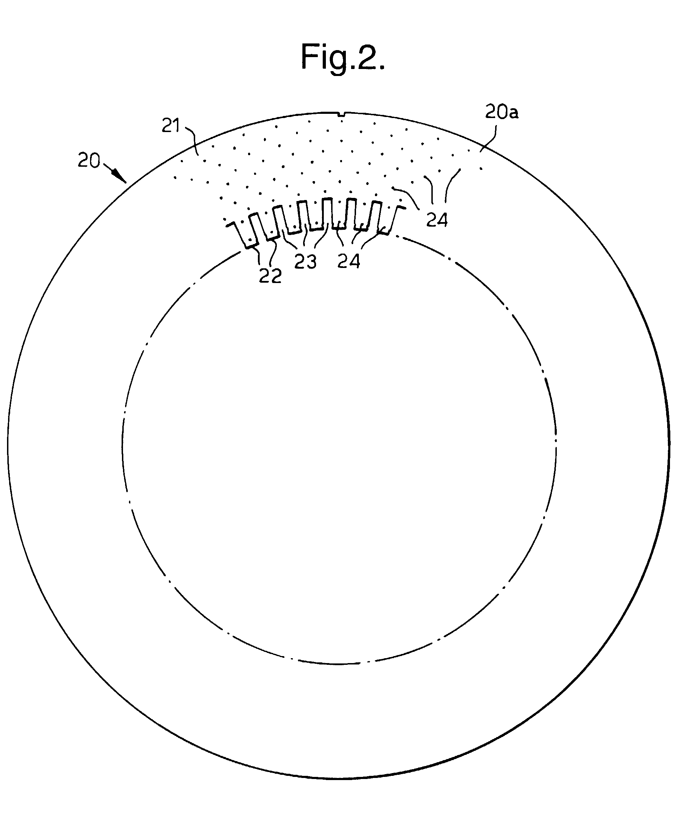

The lamination as seen in Figure 2 is a lamination 20 of a stator of an electrical rotating machine; such lamination comprises a generally annular member 21 with the inner circumference thereof being provided with generally radially inwardly extending teeth 22. Each pair of adjacent teeth 22 define therebetween a slot 23 to hold one or more windings of the stator. It is particularly envisaged that the winding(s) in each slot is (are) held in place by a respective wedge associated with the slot which wedge extends axially of the stator (see below).

The lamination as shown has a plurality of generally cylindrical members 24 affixed to a face 20a thereof with the axes of the members 24 extending transversely, e.g. substantially perpendicular to the face 20a.

It is to be understood that a laminated stator is built up from a plurality of laminations having the overall shape of the laminations shown in Figure 2 but only a small proportion of such laminations will be provided with members 24. In other words in such a stator the majority of the laminations are not provided with the cylindrical members but have simple planar faces. Thus the laminations are built up in sections each section comprising a plurality of such simple laminations plus a lamination at one end or each end of each section which end lamination or laminations is provided with the cylindrical members. In other words each section of the laminated rotor is separated from the adjacent section or sections by a plurality of generally cylindrical members.

The generally cylindrical members 14, 24 may be attached to the lamination(s) 10, 20 by any suitable fixing method although normally they will be welded (see below).

The generally cylindrical members may take any suitable form. For example, they may be of circular cylindrical form, they may be of polygonal cross-section or they could be of frusto-conical form and further they may be made of magnetic or non-magnetic metal and *inter ailia* may be of steel, stainless steel, copper, or copper coated steel, but they will generally be mass produced articles. As indicated above the members are arranged to extend between the adjacent faces of the end laminations of adjacent sections of the rotor or stator. It is particularly envisaged that all the members will be attached to just one of these laminations but the production process may involve subsequent attachment to the other lamination as the laminated component is built up. It is further envisaged that some of the members may be attached to one lamination the remainder of the members being attached to the other lamination with subsequent attachment respectively to the other or the one lamination as required.

More particularly the cylindrical members may be in the form of studs which are capacitor discharge welded to one lamination and optionally to the adjacent facing lamination. In a capacitor discharge welding technique, the head of the stud is provided with a pip and a weld is made by the discharge of a capacitor bank through the small contact provided by the pip. To initiate welding the charge capacitor bank is switched across the stud and the lamination to which the stud is to be affixed. The stud is either held in contact with the lamination or an initial gap is set. In the case of initial gap operation a gun is arranged to release a spring to provide a fast approach rate as the pip contacts the lamination. Discharge of the capacitor vaporises the pip and produces shallow melting of the surface of the stud and the lamination. The stud is rapidly driven under spring pressure onto the lamination expelling much of the melted material and contamination and providing a thin fused joint line.

Alternatively the cylindrical members may be attached to the lamination by friction welding. In such a process the cylindrical member is rotated at high speed whilst in hard contact with the lamination.

In either event welding may take place through any insulating layer which is provided on the lamination.

The cylindrical members or studs act in the assembled component to space the sections to form a cooling fluid passageway therebetween, specifically an air passageway, and the studs extend across the passageway. By virtue of the passageway for air provided in this way, a pre-determined pattern of the studs may be chosen to affect and modify the air-flow in the passageway in a controlled manner. *Inter ailia,* turbulence behind, i.e. downstream of the members in an air flow sense, is produced and this can significantly improve cooling; moreover, complex flow patterns to further improve cooling may be produced by suitable arrangement and patterning of the studs (e.g., by adjusting the density of the stud pattern) and/or by providing flow control means, such as vanes, on the individual members.

In order that the studs may be affixed to the lamination(s) in the required pattern it is particularly envisaged that an automated system, specifically a computer controlled technique e.g. CNC (computer numerical control) or DNC (direct numerical control) system be utilised to control the positioning of the studs individually and relative to each other.

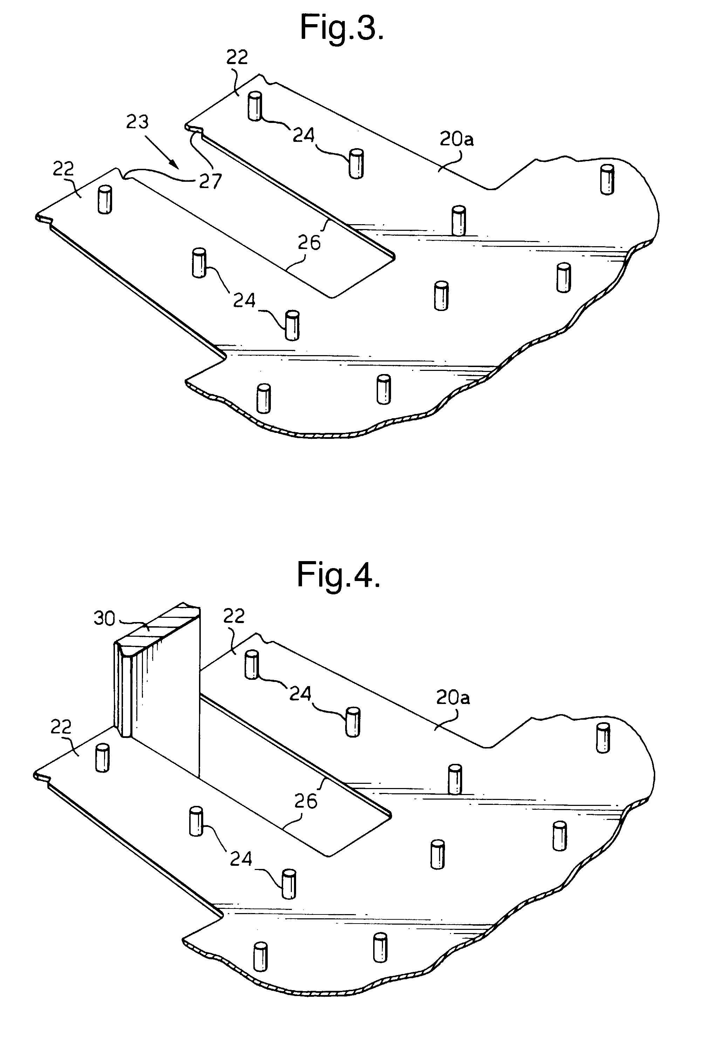

Figures 3, 4, 5 show details of the positioning of the studs 24 on and in the vicinity of the teeth 22 of the stator of Figure 2.

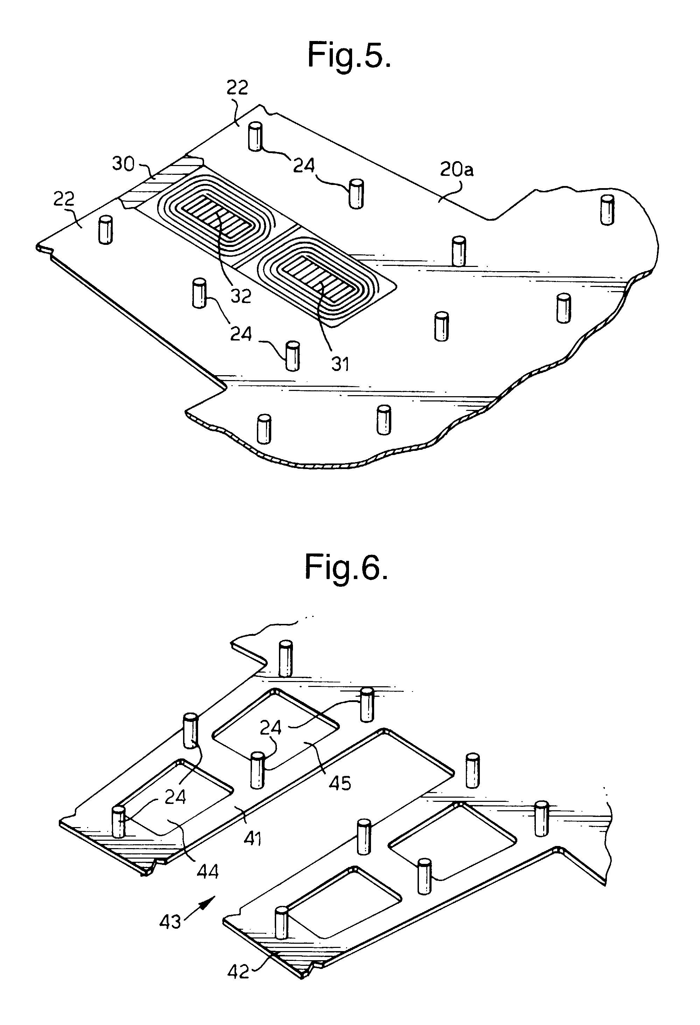

As shown in Figures 3-5 adjacent pairs of teeth 22 each define a slot 23 therebetween which extends generally radially. The facing radially extending edges 26 of the teeth 22 each include a recess 27 and the facing recesses are adapted to receive a wedge element 30 as shown in Figures 4, 5. As indicated in Figure 4 the wedge 30 extends axially of the lamination and will extend along the entire length of the stator; the assembled stator will have a plurality of wedges extending therealong there being the same number of such wedges as there are slots in a single lamination.

The wedges 30 hold one or more stator windings in the slots. In the embodiment of Figure 5 there are two such windings 31, 32.

As seen in Figures 3-5 studs 24 are provided on the teeth 23. They are arranged thereon in a pattern such that there is no restriction of the flow of the cooling medium (e.g. air) in the vicinity of the slots 23 as the air passes through the windings and through the narrow spaces in the vicinity ofthe slot wedges 30.

In the embodiment of Figure 6 is shown a stator tooth 41, part of a stator tooth 42 and the slot 43 between teeth 41 and 42. In the tooth 41 (and in the other such teeth) are formed holes 44, 45 which in the assembled stator line up with like holes in the teeth of the other laminations to form ducts extending axially of the stator which ducts provide passages for cooling air. As seen in Figure 6 studs 24 positioned on the teeth adjacent the openings provide further cooling. It is particularly envisaged that the arrangement of Figure 6 may be used in an assembly which has ventilation e.g. provided by a fan at both ends thereof. Such an assembly is described in our patent application published as GB 2,289,992A to which reference is hereby imported.

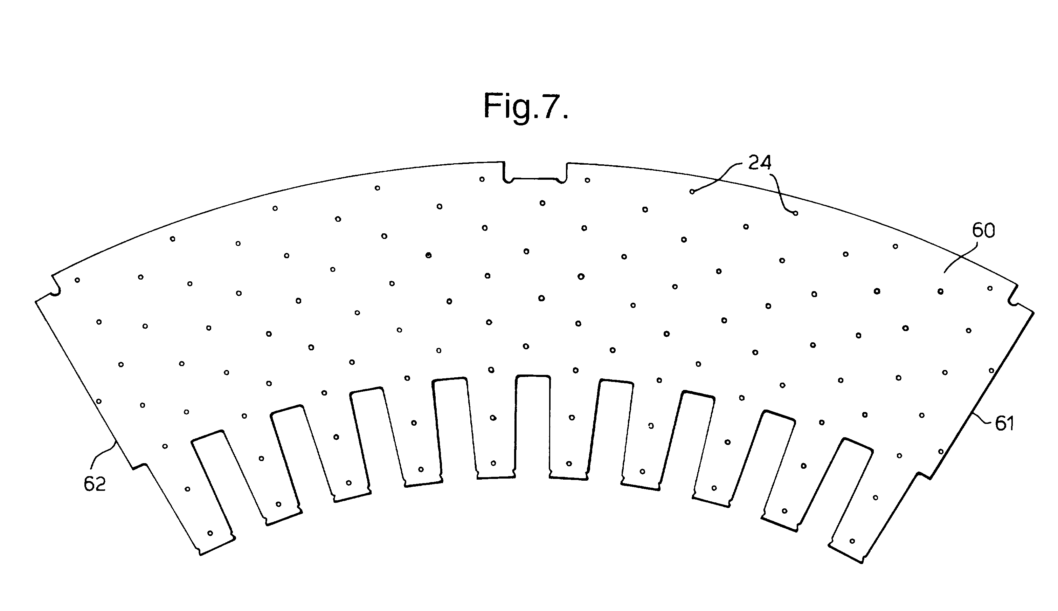

Figure 7 illustrates an embodiment of the invention wherein the studs 24 are affixed to a segment 60 of a lamination or stator, the lamination itself being formed from a plurality of such segments which abut against each other at generally radially edges 61, 62. In this embodiment, whereof each lamination is formed from a plurality of segments, the pattern of studs on each segment is preferably controlled to give a match at the edges of abutting segments rather in the nature of matching edges provided on a strip of wallpaper.

Because they can be produced by stamping from sheet material or by shearing from round wire or bar, the cost of producing the studs 14, 24 is much lower than the cost of producing conventional spacers. This allows for a greater number to be utilised to form a complex series of air flow patterns giving much improved cooling.

Indeed, by utilising such studs it has been found that yet further beneficial results can ensue. For example, the core clamping pressure which holds the laminated component together can be controlled by varying the stud spacing. Further, because the generally cylindrical members utilise less material than conventional spacers, electromagnetic losses caused by the spacers are lower.

It should be noted that a cylindrical or similar round section shape is preferred for the studs because such a shape (provided the coolant flow velocity in the coolant passageway is sufficiently high) will generate strong trailing vortices in the flow, no matter what the exact direction of impingement of the coolant flow on the studs. The trailing vortices improve the effectiveness of the coolant due to their "scrubbing" action on the surfaces of the passageway downstream of each of the studs. Nevertheless, it is envisaged that some departure from a round stud section may be tolerated, for example to a polygonal section, though a square section is unlikely to provide the degree of improvement in cooling effectiveness envisaged herein.

## Claims

1. A stator or rotor component for an electrical rotating machine, said component comprising a plurality of axially adjacent stacks of generally annular laminations, the stacks having axially extending slots (23) therein for the reception of conductors (31, 32), each lamination having apertures therein defining said slots, characterised in that the stacks are spaced apart by spacer means (24) arranged between confronting laminations of adjacent stacks, whereby a passageway for cooling fluid is formed between each pair of adjacent stacks, the spacer means comprising a pattern of mutually spaced apart axially projecting generally cylindrical members (24) attached to at least one of the confronting laminations, said pattern extending between radially inner and outer peripheries of the confronting laminations.

2. A component as claimed in Claim 1 wherein the generally cylindrical members are attached to said at least one face by welding.

3. A component as claimed in Claim 1 or Claim 2 wherein said generally cylindrical members are attached to said at least one face by capacitor discharge welding.

4. A component as claimed in any preceding claim wherein the generally cylindrical members are in the form of studs.

5. A component as claimed in any preceding claim wherein said generally cylindrical members are arranged in a predetermined pattern to achieve a predetermined cooling effect.

6. A component as claimed in any one of Claims 1-5 wherein each lamination has the form of a segment of an annulus.

7. A component as claimed in any one of claims 1-5 wherein each lamination is itself formed from a plurality of segmental members abutting one another along generally radially extending edges.

8. A component as claimed in any preceding claim, being a rotor.

9. A component as claimed in any one of claims 1-7, being a stator.

10. An electrical rotating machine comprising at least one component as claimed in any preceding claim.

11. A lamination for use in a component of an electrical machine, characterised in that said lamination (20) has affixed to at least one face thereof (20a) a plurality of generally cylindrical members (24), the longitudinal axes of the generally cylindrical members extending transversely to said face.

12. A lamination as claimed in Claim 11 wherein said lamination is annular in shape.

13. A lamination as claimed in Claim 11 wherein said lamination has the form of a segment of an annulus.

14. A method of forming a laminated component of an electrical rotating machine, said method being characterised by the steps of(i) affixing of a plurality of generally cylindrical members (24) to a face (20a) of a lamination (20) to extend transversely to said face, and (ii) bringing the free ends of said generally cylindrical members into juxtaposition with a face of another lamination such that a passageway for cooling fluid is formed between the faces with said generally cylindrical members extending generally across said passageway.
